# EUROPEAN PATENT SPECIFICATION

(11) **EP 2 930 977 B1**
(45) Date of publication and mention of the grant of the patent: **22.11.2017**
(21) Application number: 14290095.0
(22) Date of filing: 07.04.2014
(51) Int. Cl.: H04W 24/04, H04W 40/34, H04W 76/00

(54) **A method for operating a base station**
Verfahren zum Betrieb einer Basisstation
Procédé de fonctionnement d'une station de base

(43) Date of publication of application: 14.10.2015
(73) Proprietor: ALCATEL LUCENT, 92100 Boulogne-Billancourt (FR)
(72) Inventor: Aydin, Osman, 70569 Stuttgart (DE); Doetsch, Uwe, 74392 Freudental (DE)
(74) Representative: Wetzel, Emmanuelle

(56) References cited:
- WO-A1-2012/063849
- WO-A1-2012/154130
- WO-A1-2013/142361
- US-A1- 2006 223 493
- US-A1- 2007 155 375
- US-A1- 2013 003 534

## Description

### Technical Field

The disclosure relates to telecommunication systems, and more particularly to a method for operating a base station in a mobile communication system.

### Background

In mobile telecommunications, base stations are used to provide and increase the capacity of cellular networks at places with demand for broadband communication. However, there is a continuous need to improve the operation of the base stations with the cellular networks.

US 2013/0003534 A1 discloses emergency backhaul links for wireless telecommunications networks.

WO 2013/142361 A1 discloses method and apparatus for offloading backhaul traffic.

WO 2012/154130 A1 discloses a base station and method of operating the base station.

WO 2012/063849 A1 discloses a communication system, wireless base station, and communication control method.

US 2007/155375 A1 discloses cellular telecommunications system and methods of monitoring, control and communications.

US 2006/223493 A1 discloses a method and apparatus for enhancing the survivability of wireless communication systems in response to catastrophic events.

### Summary

In accordance with the present invention, a method as set forth in the independent claim 1 is provided and a base station as set forth in the independent claim 12 is provided. Additional embodiments of the invention are described in the dependent claims. In some embodiments, a method is provided for operating a first base station in a communication system, the first base station using a first communication link for exchanging data to interoperate with a first core network, the communication system comprising a second base station. The method comprises detecting a malfunction of the first communication link, and establishing a second communication link from the first base station to a selected core network of the first and a second core network of the communication system via the second base station, with the second base station exchanging on behalf of the first base station data with the selected core network, whereby the first base station interoperates with the selected core network through the second base station.

In one embodiment, the second base station is connected to the first core network. In another embodiment, the second base station is connected to the second core network. For example, the first and second core networks may belong to the same operator or to different operators.

An operator may be a core network operator, radio access network operator, or a combination thereof.

The term "UE" stands for user equipment.

According to one embodiment, the first base station comprises a built-in UE, wherein the first base station communicates with at least the second base station using the built-in UE. For example, the first base station may be configured to include at least part of the functionality of a user equipment.

For example, when the first base station is using the built-in UE it may communicate with the second base station as a user equipment i.e. using the UE functionality such as the functionality of a user equipment in LTE communication systems, e.g. during malfunction of the first communication link of the first base station. This may be done while maintaining the base station's functionality (e.g. functionality of a base station in LTE communication systems) for serving for example, other user equipment. This may be advantageous as it may provide an alternative communication link to the communication link between the first and second base stations and the first core network respectively like the X2 link in LTE and/or S1 link. The S1 link like in LTE from the first base station will be established via the second base station to the first core network. For example, the first base station may have a specific hardware ID, software ID (e.g. IMEI, MAC or IP address) or a specific UE class to get guaranteed access and service on the second base station.

For example, the second base station may comprise a relay function that may work on data transmission layers that are used by the first base station.

For example, the first communication link being a disconnected or a broken link may indicate the malfunction of the first communication link. In another example, the malfunction may be due to a traffic congestion in the first communication link or due to a natural disaster broken the first communication link.

For example, the detection of the malfunction may comprise measuring a signal rate (and/or the capacity of the first communication link) at which signals are transmitted over the first communication link; comparing the signal rate to a predefined minimum rate threshold value; identifying the malfunction based on the results of the comparison. For example, in case the minimum rate threshold value is 0 the malfunction may refer to a broken communication link case. In another example, the detection may comprise evaluating the respond messages (by the first or second base station) for lost transmission packets (e.g. missing acknowledgements) and/or measuring ping performance between transmission end points.

These features may be advantageous as they may enable and increase the availability of the communication system, ensuring a continuous and QoS-guaranteed service provided by the communication system. Thus, it may overcome poor QoS that may result in these environments due to a non-recovery of the malfunctioning communication link.

Another advantage may reside in the fact that the capacity of the communication system may be maintained such that the initial number of served users may still be served. This may allow the prediction of the communication system, function which may then be used for efficiently configuring the communication system (i.e. in case the malfunction is not recovered the configuration of the communication system may be re-planned accordingly).

For example, this may provide a recovery process of the malfunctioning first communication link where the target is to keep radio communication for public safety modus alive, guaranteed in emergency cases. In case of a disaster several failure scenarios could occur. The base station is still running, but the connection to a core network and/or to the other base stations may be broken.

The term "communication link" refers to any suitable wireless or wireline system that supports communication between network elements using a predefined interface that is configured in the network elements being in communication.

According to one embodiment, establishing the second communication link comprises:
- sending an authorization request by the first base station to the selected core network via the second base station, the authorization request comprising an indication of the first core network and a status information indicating the malfunction of the first communication link;
- the selected core network upon validating the authorization request sending an approval of the authorization request to the second base station;
- registering the first base station by the second base station as a malfunctioning base station; and
- receiving by the first base station from the second base station the approval of the authorization request indicative of authorization information for subsequent communication of the first base station with the second base station.

For example, the authorization request may further indicate the first base station e.g. using an ID such as an IP number of the first base station.

For example, the second base station may assign the highest processing priority to the request that includes the authorization information. This may speed up the recovery process of establishing the second communication link, and may thus further increase the availability of the communication system.

According to one embodiment, the method further comprises before detecting the malfunction:
- sending an authorization request for a potential connection establishment through the second base station by the first base station to the second core network via the second base station, the authorization request comprising an indication of the first core network;
- the selected core network upon validating the authorization request sending an approval of the authorization request to the second base station;
- registering the first base station by the second base station as a malfunctioning base station; and
- receiving by the first base station from the second base station the approval of the authorization request indicative of authorization information for subsequent communication of the first base station with the second base station.

For example, the registering of the first base station may also indicate that the first base station may be allowed to communicate via the second base station to one or more predefined core networks.

This embodiment may be advantageous as it may further increase the availability of the communication system compared to the case where the authorization request is sent after the malfunction happens. This is because, the time required to request the authorization and receive the approval after the malfunction happens may be saved and thus the recovery process is further speed-up.

According to one embodiment, establishing the second communication link further comprises using by the first base station the authorization information for requesting the establishment of at least a portion of the second communication link that connects the second base station to the selected core network.

For example, by having access to the second base station using the specific authorization information, the recovery or the establishment of the second communication link may be prioritized over other processing tasks of the second base station. This may speed-up the recovery process of the malfunctioning first communication link, which may then further increase the availability of the communication system.

According to one embodiment, the selected core network is the second core network, the establishment of the portion of the second communication link comprising sending an initial request for setting-up an interface between the second base station and the second core network for providing configuration data to the second core network, wherein the configuration data is enabling the first base station to interoperate with the second core network and the second base station to operate as an intermediate communication node between the first base station and the second core network. In this case, for example, the second base station may be connected to the second core network.

This embodiment may provide an optimal usage of the resources of the communication system so as to maintain the communication system available. In this embodiment, the second base station may be connected to the second core network.

According to one embodiment, the selected core network is the first core network, the establishment of the portion of the second communication link comprising sending a request for setting-up an interface between the second base station and the first core network for providing a base station configuration update message to update application level configuration data needed for the first core network to interoperate with the first base station using the second base station as an intermediate communication node, the configuration update message indicating the configuration status of the first base station before the detection of the malfunction. In this case, for example, the second base station may be connected to the first core network.

Maintaining the connection of the first base station with a core network which is the first core network may reduce the burden caused by setting-up from scratch a new link with or via a new core network.

According to one embodiment, the method further comprises sending the authorization request and the establishment request to a user equipment that is connected to the first base station, such that the user equipment forwards the received requests to the second base station.

For example, the first base station comprises UE context information of the user equipment.

According to one embodiment, the method further comprises broadcasting the authorization request and the establishment request, and intercepting the broadcasted requests by a user equipment that is connected to the first base station, such that the user equipment forwards the received requests to the second base station.

According to one embodiment, the user equipment is connected to both the first and second base station.

For example, the authorization request may be sent to the user equipment such that it forwards the authorization request to the second base station while the establishment request of the second communication link may be directly communicated to the second base station by the first base station. In this case, the user equipment may be roaming from a first area where the authorization request is received to a second area covered by the second base station. In other words, the user equipment may be connected to the second base station only after the response to the authorization request is forwarded by the user equipment to the first base station.

According to one embodiment, in case the user equipment is not in the coverage area of the second base station, the user equipment is forwarding the requests via at least one second user equipment that is in the coverage area of the second base station.

This may provide a dynamic approach where the selection of the second base station may not be limited in space as in the case where the communication is directly performed between the first and second base stations.

According to one embodiment, the second base station is a base station in a set of base stations, the method further comprising selecting the second base station from the set of base stations using a selection criterion, the selection criterion comprising the operator associated with the second core network being the operator associated with the first core network.

In other terms, neighbor cells (e.g. served by first and second base stations) connection priority is first the intra-operator case then the inter-operator case. This may further speed-up the recovery process as it may not require extra signaling for connection with an inter-operator core network.

According to one embodiment, in case the communication link between the second base station and the second core network is malfunctioning, the method further comprises establishing a third communication link from the first base station to one of the first and a third core network via the second base station and a third base station in communication with the third core network.

In some embodiments, a first base station is using a first communication link for exchanging data to interoperate with a first core network in a communication system, the communication system comprising a second base station, the first base station being adapted for:
- detecting a malfunction of the first communication link; and
- establishing a second communication link from the first base station to a selected core network of the first and a second core network of the communication system, via the second base station, such that the second base station exchanges on behalf of the first base station data with the selected core network such that the first base station interoperate with the selected core network.

In some embodiments, a second base station in a communication system, the communication system comprising a first base station using a first communication link for exchanging data to interoperate with a first core network in the communication system, the second base station being adapted for:
- detecting a malfunction of the first communication link; and
- establishing a second communication link from the first base station to a selected core network of the first and a second core network of the communication system via the second base station, such that the second base station exchanges on behalf of the first base station data with the selected core network such that the first base station interoperate with the selected core network.

For example, the second base station may intercept a broadcasted request by the first base station indicative of the malfunction of the first communication link, thereby detecting the malfunction. In response to that detection the second base station may establish the second communication link for the first base station e.g. by sending an initial request for setting-up an interface between the second base station and the second core network for providing configuration data to the second core network.

### Brief description of the drawings

In the following examples are explained in greater detail, by way of example only, making reference to the drawings in which:
Figure 1 shows a simplified structure of a communication system as part of a mobile telecommunication system,
Figure 2 is a signaling diagram illustrating a process of requesting an authorization request,
Figure 3 shows another example of a simplified structure of a communication system as part of a mobile telecommunication system,
Figure 4 shows another example of a simplified structure of a communication system as part of a mobile telecommunication system,
Figure 5 shows another example of a simplified structure of a communication system as part of a mobile telecommunication system,
Figure 6 shows another example of a simplified structure of a communication system as part of a mobile telecommunication system,
Figure 7 shows another example of a simplified structure of a communication system as part of a mobile telecommunication system, and
Figure 8 is a flowchart of a method for operating a first base station.

### Detailed description

In the following, like numbered elements in these figures are either similar elements or perform an equivalent function. Elements which have been discussed previously will not necessarily be discussed in later figures if the function is equivalent.

It is understood in advance that although this disclosure includes a detailed description on cloud computing, implementation of the teachings recited herein are not limited to a cloud computing environment. Rather, examples of the present disclosure are capable of being implemented in conjunction with any other type of computing environment now known or later developed.

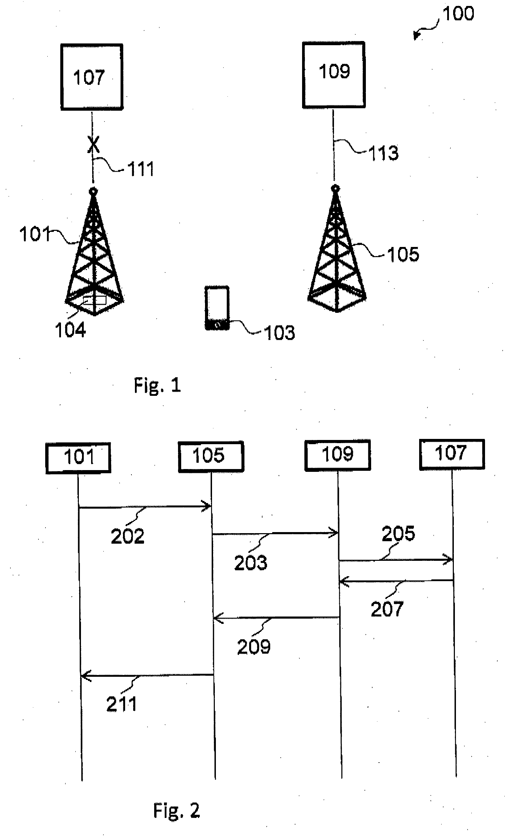

FIG. 1 shows a simplified structure of a communication system 100 as part of a mobile telecommunication system. By way of example, the mobile telecommunication system may be a Long Term Evolution (LTE) communication system. Although the mobile telecommunication system that is based on the LTE scheme is described as an example, the present disclosure is also applicable to other mobile communication systems e.g. a Universal Mobile Telecommunications System (UMTS) or any communication system that is using radio equipment and/or involving communications between base stations and other core network elements.

The communication system 100 comprises a first base station 101. The first base station 101 is serving, within a first cell, a mobile station such as a user equipment 103. The communication system 100 further comprises a second base station 105. The communication system 100 further comprises a first core network 107 and a second core network 109. The first and second core networks 107, 109 may grant users permission to the network and/or keep track of the first 101 and second 105 base stations respectively. This may be done by several entities of a core network, namely the Mobile Management Entity (MME), the Home Subscriber Server (HSS), the Serving Gateway SGW and the PGW (PDN-GW, Packet Data Network Gateway).

The first base station is connected to the first core network via a first communication link 111. The second base station is connected to the second core network via a second communication link 113. For simplicity of the description the first and second base station 101 and 105 are shown connected to different core networks 107 and 109; however, the skilled person having access to the present disclosure will understand that the second base station 105 may also be connected to the same core network i.e. the first core network 107 as the first base station 101 such that the alternative or second communication link may be established between the first base station 101 and the first core network 107 via the second base station 105.

For example, the first base station 101 may be configured with an operating S1-Interface according to 3GPP standards. The S1 interface may be used for communication through the first communication link 111, the first communication link 111 may be thus a S1 link. Also, the second base station 105 may use an S1 interface for communication through the second communication link 113 e.g. a S1 link with the second core network 109.

Both first and second base stations 101 and 105 may operate using different frequency bands or the same frequency bands. For example, the first and second base stations 101 and 105 may represent a HetNet system. For example, the first base station 101 may be serving a pico cell while the second base station is serving a macro cell or vice versa.

The user equipment 103 is connected to and is communicating with the first base station 101 and the second base station 105.

Both first and second base stations 101 and 105 may belong to different or the same operators. An operator may, for example, provide services to subscribers as one of multiple serving operators that share at least a radio access network that includes at least one of the first 101 and second 105 base station. Each operator may provide services to subscriber of other operators by national or international roaming.

The first base station 101 may comprise a built-in UE 104 such that it can communicate with the second base station 105. For example, the first base station 101 may have a UE class or identifier (IMEI/MAC address) to get guaranteed access and service on the second base station 105. The first base station 101 may be configured to include at least part of the functionality of a user equipment, e.g. such as the user equipment of the LTE or UMTS system.

For example, the first base station 101 may interoperate with the first core network 107 via the first communication link 111. The interoperation may, for example, provide non UE-associated services that are related to the first base station 101 and the first core network 107 utilizing a non UE-associated signaling connection, or UE-associated services that are related to UE 103 utilizing UE-associated signaling connection that is maintained for the UE 103.

The first communication link 111 is drawn overlapped with a cross sign to indicate that the first communication link 111 is malfunctioning e.g. broken. The malfunction of the first communication link 111 may be due for example to a traffic congestion in the first communication link 111, to the fact that the first communication link 111 is completely broken, or to a load balancing decision in the communication system 100, where the load balancing decision concerns the replacement of the first communication link 111.

In case of the UMTS system, the first and second communication links 111, 113 may pass through at least one radio network controller RNC (not shown). In this case, the malfunction may happen in at least one of a portion of the first communication link 111 linking the first base station 101 to the RNC and a portion of the first communication link 111 linking the RNC to the first core network 107.

Fig. 2 is a signaling diagram illustrating a process of requesting an authorization by the first base station 101 in order to use the second base station 105 as an intermediated or relay communication node for communication with the first 107 and/or second 109 core network.

The process of requesting the authorization may be performed before and/or after the malfunction of the first communication link 111 is detected. For example, if the authorization request didn't succeed before the malfunction happens, the authorization request may be sent again after the malfunction happens.

The first base station 101 may transmit the authorization request to the second base station 105 (step 202). This may be done for example via the X2 link (like implemented in LTE) between the first and second base stations 101, 105 e.g. in case the malfunction didn't happen yet at the time of transmitting the authorization request. The authorization request may indicate at least one of the first core network 107, the ID of the operator associated with the first core network 107 and an ID of the first base station 101. For example, in case the authorization request is sent after the detection of the malfunction, it may further comprise an indication of the malfunction of the first communication link 111. The indication of the malfunction may comprise for example the loss of the first communication link 111, the capacity or the data rate of the malfunctioning first communication link 111.

The second base station 105 may forward the request to the second core network 109 using an already established link or interface between the second base station 105 and the second core network 109 (step 203). For example, the authorization request may be forwarded via an S1 link 113. It may be forwarded as an eNB CONFIGURATION TRANSFER message. In another example, the communication system 100 may be configured such that a message is used to forward the authorization request to the second core network 109.

The second core network 109 may check the information contained in the request with the first core network 107. For example, the second core network 109 may send a message (step 205) indicating the ID of the first base station 101 for requesting the verification (e.g. by comparing the ID of the first base station of existing IDs in the first core network) of the ID by the first core network 107. The first core network 107 may thus send a response confirming that the first base station 101 is indeed associated with the first core network 107 (step 207).

The second core network 109 may send a response to the forwarded authorization request to the second base station 105 (step 209). The response may indicate an approval of the request of authorization originally sent by the first base station 101. In another example, the response may indicate a conditional approval of the authorization request. The conditional approval may consider whether the second base station 105 comprises enough resources to support the eventual intermediate communication (or to support the relaying function). For example, it may determine available resources for the second base station 105 and compare them with a predefined minimum required resources (to run other processes by the second base station 105) threshold value. In case, the available resources are higher than the predefined minimum required resources threshold value, the second base station 105 may send an approval to the request of the authorization to the first base station 101 (step 211). The approval may indicate authorization information.

For example, the authorization information may comprise authorization and/or security keys that can be used in subsequent communication with the second base station 105. The security keys may depend on the core network with which the first base station 101 would connect again after the malfunction happens. For example, different security keys may be associated to the second core network 109 and the first core network 107.

Using the authorization information, the second base station 105 may assign for example the highest priority to the requests containing such authorization information. This may for example speed up the recovery process of the malfunctioning communication link 111.

In an alternative example, the authorization request may be sent by the first base station 101 via the user equipment 103 to the second base station 105. The user equipment 103 may be controlled such that it forwards the authorization request to the second base station 105. The second base station 105 may send the approval to the authorization request to the first base station 101 via the user equipment 103. The user equipment 103 may be controlled such that it forwards the approval of the authorization request to the first base station 101.

The UE may 103 access the second base station 105 with specific protocol header and content to get guaranteed access and service if sending the authorization request.

In another example, the first base station 101 may send the authorization request to the second base station using the built-in UE 104. This is particularly advantageous in case the built-in UE 104 has a better radio link to the second base station compared to the UE in the proximity (radio coverage area) of the first base station.

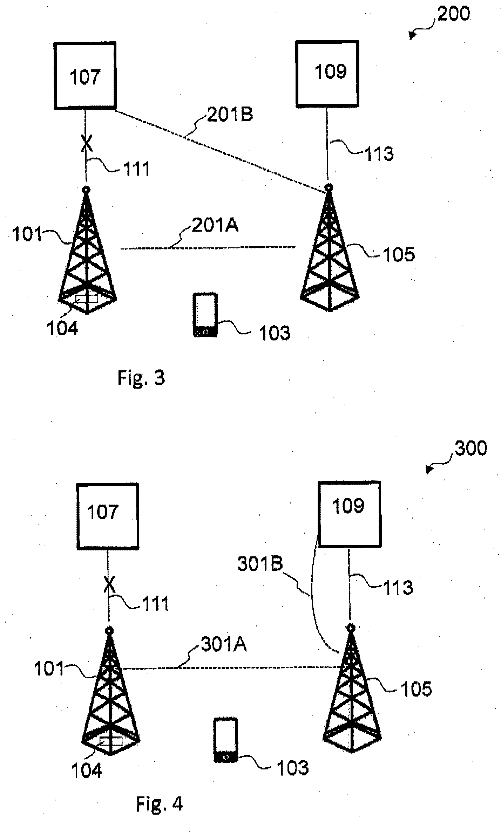

Fig. 3 is an example of another simplified structure of a communication system 200 comprising the elements of the communication system 100. In addition, an alternative communication link 201 (comprising portions 201A and 201B) of the first communication link 111 between the first base station 101 and the second core network 109 is established.

For example, the alternative communication link 201 may be established by sending by the first base station 101 an establishment request for establishing the alternative communication link 201. The establishment request may be sent as soon as the malfunction of the first communication link 111 is detected. The establishment request may indicate the authorization information such as authorization and/or security keys to access the second base station services. The establishment request may further indicate a core network to which it may connect again e.g. the first core network. Alternatively, the core network to which it may connect again the first base station 101 may be selected by the second base station 105. The core network to which it may connect again the first base station 101 may be selected from a list of core networks that is stored in the first base station 101 and/or the second base station 105. The establishment request may be sent for requesting the establishment of at least a portion 201B of the alternative communication link 201 that connects the second base station 105 to the first core network 107. The establishment request may be sent using the built-in UE 104 to the second base station 105 e.g. in an RRC Connection Request message. In this case the portion 201A of the alternative communication link 201 may be an air interface link.

In a further example, the first base station 101 may send the establishment request to the second base station 103 via the user equipment 103. The UE 103 may use an RRC Connection Request message to forward the establishment request to the second base station 105. The UE 103 may be configured to forward the establishment request to the second base station 105 in response to receiving the establishment request. In another example, the establishment request may comprise a configuration data that controls the UE 103 to forward the establishment request to the second base station 105.

The UE 103 may access the second base station 105 with specific protocol header and content to get guaranteed access and service if relaying the backhaul link (111) of the first base station 101.

Upon receiving the establishment request, the second base station 105 may send an initial request to the first core network 107 for setting-up an interface between the second base station 105 and the first core network 109 for providing a base station configuration update message to update application level configuration data needed for the first core network 107 to interoperate with the first base station 101 using the second base station 105 as an intermediate or a relay communication node. The base station configuration update message comprises configuration data. The configuration data indicates the configuration status of the first base station 101 before the detection of the malfunction. The configuration data may enable the first base station 101 to interoperate with the first core network 107 and the second base station 105 to operate as an intermediate or a relay communication node between the first base station 101 and the first core network 107. For example, the initial request may be sent as an S1 SETUP REQUEST or a as a message configured such that it contains the initial request in a given format that can be decoded by the first core network 107. The second base station 105 may receive an acknowledgement from the first core network 105. In another example, no acknowledgement may be required. This may result in the second base station 105 having two communication links 113 to the second core network 109 and 201B with the first core network 107.

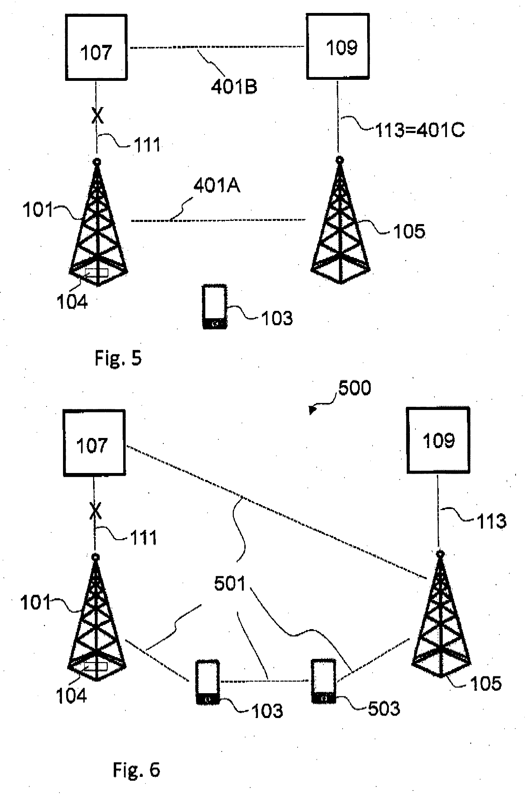

The second base station 105 may send the initial request directly to the first core network 107 or via the second core network 109 (as shown with reference to Fig. 5 where the alternative communication link 401 comprising portions 401A-C may be established between the first base station 101 and the first core network 107 via the second base station 105 and the second core network 109).

After the setup of the alternative communication link 201, the first base station 101 may continue providing services as it has been the case before the malfunction happens.

In an alternative example, as soon as the malfunction of the first communication link 111 happens, the first base station 101 may broadcast a failure message indicative of the malfunction. The failure message may indicate the authorization information. The broadcasted failure message may be intercepted by the second base station 105 (i.e. detect the malfunction), and upon intercepting the failure message the second base station 105 may establish the communication link 201B as described above. Further it may inform the first base station 101 e.g. via the built-in UE 104 or the UE 103 that the communication link 201B is established such that the first base station 101 may use the communication link 201 as an alternative communication link to the first communication link 111 that can be used for interoperation with the first core network 107.

In another example, upon intercepting the broadcasted message by the second base station 105 it may send a control message to the first base station 101 for controlling the first base station 101 to initiate the establishment request of the alternative communication link as described above.

For example, the broadcasting of the failure and/or the transmission of the establishment request may be done either in a protocol layer information on lower layers , i.e. the MAC layer or via higher layer information, e.g. application layer with header information where the failure status should go to (e.g. operation maintenance center IP Address).

The second base station 105 (or network) may be equipped with a function to recognize the first base station's 101 backhauling authorization and establishment requests e.g. by UEs relaying this backhaul/request. The requests may be discovered in the second base station 105 by specific protocol information and header. E.g. in the MAC Layer of the second base station 105. The specific protocol information and header gives information of e.g. about the information content, i.e. "disaster case (malfunction) with alternative link 201 to be established". And/or of termination point of the data attached to this signaling of the requests, i.e. endpoint of the data, IP address of the core network to which the first base station 101 is to be connected and other information of the target network operator e.g. of the first core network.

Fig .4 is an example of another simplified structure of a communication system 300 comprising the elements of the communication system 100. In addition, an alternative communication link 301 (comprising portions 301A and 301B) of the first communication link 111 between the first base station 101 and the second core network 109 is established.

As described above, the alternative communication link 301 may be established by sending by the first base station 101 an establishment request for establishing the alternative communication link 301. The establishment request may be sent as soon as the malfunction of the first communication link 111 is detected. The establishment request may indicate the authorization information such as authorization and/or security keys to access the second base station services. The establishment request may be sent for requesting the establishment of at least a portion 301B of the alternative communication link 301 that connects the second base station 105 to the second core network 109. The establishment request may be sent via the UE 103. In another example, where the first base station 101 comprises the built-in UE 104 the establishment request may be sent to the second base station 105 via this built-in UE 104 e.g. with an RRC Connection Request message.

Upon receiving the establishment request, the second base station 105 may send an initial request to the second core network 109 for setting-up an interface between the second base station 105 and the second core network 109 for providing configuration data to the second core network 109. The configuration data may enable the first base station 101 to interoperate with the second core network 109 and the second base station 105 to operate as an intermediate or a relay communication node between the first base station 101 and the second core network 109. For example, the initial request may be sent as an S1 SETUP REQUEST.

Fig. 6 is an example of another simplified structure of a communication system 500 comprising the elements of the communication system 100.

In this example, the UE 103 may not be in the coverage area of the second base station 105. In this case, the messages that are received by the UE 103 in order to request authorization or establishment of the alternative communication link 501 may be forwarded to a second UE 503 that is in the coverage area of the second base station 109. The UE 103 may be configured to forward the received authorization and/or establishment request to the UE 503. The UE 503 may be configured to forward the received authorization and/or establishment request to the second base station 105. The UE 503 may be further configured to forward the received approval to the authorization request to the UE 103. The UE 103 and UE 503 may directly communicate by establishing a radio connection between them without transiting via the network. The alternative communication link 501 or the alternative communication link between the first base station 101 and the second core network 109 via the UEs 103 and 503 and the second based station 105 can be used by the first base station 101 to establish an alternative connection to core network 107 or 109 respectively e.g. in the case the communication link 111 is broken.

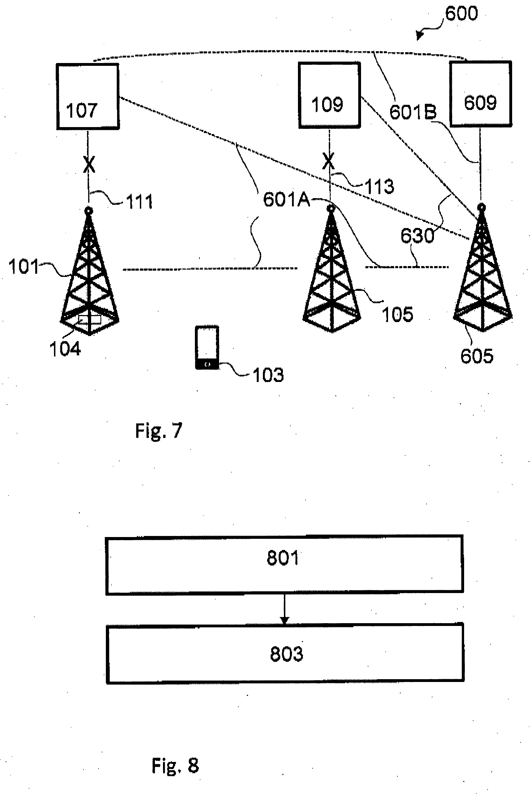

Fig. 7 is an example of another simplified structure of a communication system 600 comprising the elements of the communication system 100. In addition, the communication system 600 comprises a third base station 605 that is connected to a third core network 609. In this example, the second communication link 113 is malfunctioning e.g. broken link as well. This scenario may prevent the establishment of the alternative communication links 201, 301, 401 and 501 via the second base station 105. In this case, the received requests by the second base station 105 are forwarded to the third base station 605 such that a third communication link 601 or 603 from the first base station to one of the first and the third core network 609 via the second base station 105 and the third base station 605 is established. This may result in one of the alternative communication links 601A or 601B. The difference between the alternative communication links 601A or 601B is that in the alternative communication link 601B, the third base station 605 communicates with the first core network 107 via the third core network 609.

Further, another alternative communication link 630 between the second base station and the second core network 109 may be established to recover the malfunction of the second communication link 113 (or an alternative communication link between the second base station and the third core network via the third base station). The other alternative communication link 630 is established between the second base station 105 and the second core network 109 via the third base station 605 using the method as described above with reference to the first communication link 111. For example, the second base station 105 may be configured to include at least part of the functionality of a user equipment.

Fig. 8 is a flowchart of a method for operating a first base station in a communication system. The first base station using a first communication link for exchanging data to interoperate with a first core network. The communication system comprises a second base station.

In step 801, malfunction of the first communication link is detected. In step 803 a second communication link is established from the first base station to a selected core network of the first and a second core network of the communication system via the second base station, with the second base station exchanging on behalf of the first base station data with the selected core network, whereby the first base station interoperates with the selected core network through the second base station.

### List of reference numerals

- 100: communication system,
- 101: first base station,
- 103: user equipment,
- 104: built-in UE
- 105: second base station,
- 107: first core network,
- 109: second core network,
- 111: first communication link.
- 113: second communication link,
- 200: communication system,
- 201, 301, 401, 501, 601: alternative communication link,
- 300: communication system,
- 400: communication system,
- 500: communication system,
- 503: user equipment,
- 600: communication system,
- 605: third base station,
- 609: third core network.

## Claims

1. A method for operating a first base station (101) in a communication system (100), the first base station (101) using a first communication link (111) for exchanging data to interoperate with a first core network (107) of the communication system, the communication system (100) comprising a second base station (105), the method comprising:
- detecting a malfunction of the first communication link (111); and
- establishing a second communication link (201) from the first base station (101) to a selected core network of the first (107) and a second core network (109) of the communication system (100) via the second base station (105), with the second base station (105) receiving data from the first base station via the second communication link and forwarding the received data to the selected core network, whereby the first base station (101) interoperates with the selected core network through the second base station (105), **characterized in that** the method further comprises, before detecting the malfunction:
- sending an authorization request for a potential connection establishment through the second base station (105) by the first base station (101) to the selected core network via the second base station (105), the authorization request comprising an indication of the first core network (107);
- the selected core network upon validating the authorization request sending an approval of the authorization request to the second base station (105);
- registering the first base station (101) by the second base station (105) as a malfunctioning base station; and
- receiving by the first base station (101) from the second base station (105) the approval of the authorization request indicative of authorization information for subsequent communication of the first base station (101) with the second base station (105).

2. The method of claim 1, wherein establishing the second communication link (201) further comprises using by the first base station (101) the authorization information for requesting the establishment of at least a portion of the second communication link (201B, 301B) that connects the second base station (105) to the selected core network.

3. The method of claim 2, wherein the selected core network is the second core network (109), the establishment of the portion (301B) of the second communication link (201) comprising sending an initial request for setting-up an interface between the second base station (105) and the second core network (109) for providing configuration data to the second core network (109), wherein the configuration data is enabling the first base station (101) to interoperate with the second core network (109) and the second base station (105) to operate as an intermediate communication node between the first base station (101) and the second core network (109).

4. The method of claim 2, wherein the selected core network is the first core network (107), the establishment of the portion of the second communication link (201B) comprising sending a request for setting-up an interface between the second base station (105) and the first core network (107) for providing a base station configuration update message to update application level configuration data needed for the first core network (107) to interoperate with the first base station (101) using the second base station (107) as an intermediate communication node, the configuration update message indicating the configuration status of the first base station (101) before the detection of the malfunction.

5. The method of any of preceding claims 2-4, further comprising sending the authorization request and the establishment request to a user equipment (103) that is connected to the first base station (101), such that the user equipment (103) forwards the received requests to the second base station (105).

6. The method of any of preceding claims 2-4, comprising broadcasting the authorization request and the establishment request, and intercepting the broadcasted requests by a user equipment that is connected to the first base station, such that the user equipment forwards the received requests to the second base station.

7. The method of claim 5 or 6, wherein the user equipment (103) is connected to both the first (101) and second base station (105).

8. The method of any of preceding claims 5-7, wherein in case the user equipment (103) is not in the coverage area of the second base station (105), the user equipment (103) is forwarding the requests via at least one second user equipment, UE, (503) that is in the coverage area of the second base station (105).

9. The method of any of preceding claims, the second base station (105) being a base station in a set of base stations, the method further comprising selecting the second base station (105) from the set of base stations using a selection criterion, the selection criterion comprising the operator associated with the second core network (109) being the operator associated with the first core network (107).

10. The method of any of preceding claims, wherein in case the communication link (113) between the second base station and the second core network is malfunctioning, the method further comprises establishing a third communication link (601) from the first base station (101) to one of the first (107) and a third core network (601) via the second base station (105) and a third base station (605) in communication with the third core network (609).

11. The method of any of preceding claims, wherein the first base station (101) comprises a built-in UE (104), wherein the first base station (101) communicates with at least the second base station (105) using the built-in UE (104).

12. A first base station using a first communication link (111) for exchanging data to interoperate with a first core network (107) in a communication system (100), the communication system (100) comprising a second base station (105), the first base station being adapted
- to detect a malfunction of the first communication link (111); and
- to establish a second communication link (201) from the first base station (101) to a selected core network of the first and a second core network of the communication system (100) via the second base station (105),
- to send data to the selected core network via the second communication link, **characterized in that** the first base station is further adapted,
before detecting the malfunction,
- to send an authorization request for a potential connection establishment through the second base station (105) to the selected core network via the second base station (105), the authorization request comprising an indication of the first core network (107),
- to receive from the selected core network via the second base station (105) an approval of the authorization request indicative of authorization information for subsequent communication of the first base station (101) with the second base station (105).

## Patentansprüche

1. Verfahren zum Betreiben einer ersten Basisstation (101) in einem Kommunikationssystem (100), wobei die erste Basisstation (101) eine erste Kommunikationsverbindung (111) zum Austauschen von Daten verwendet, um mit dem ersten Kernnetzwerk (107) des Kommunikationssystems zu interagieren, wobei das Kommunikationssystem (100) eine zweite Basisstation (105) umfasst, wobei das Verfahren umfasst:
- Erkennen einer Fehlfunktion der ersten Kommunikationsverbindung (111); und
- Aufbau einer zweiten Kommunikationsverbindung (201) aus der ersten Basisstation (101), für ein ausgewähltes Kernnetzwerk des ersten (107) und eines zweiten Kernnetzwerks (109) des Kommunikationssystems (100) über die zweite Basisstation (105), wobei die zweite Basisstation (105) Daten von der ersten Basisstation über die zweite Kommunikationsverbindung erhält und die empfangenen Daten an das ausgewählte Kernnetzwerk weiterleitet, wobei die erste Basisstation (101) mit dem ausgewählten Kernnetzwerk durch die zweite Basisstation (105) interagiert,
**dadurch gekennzeichnet, dass** das Verfahren weiterhin vor dem Erkennen der Fehlfunktion umfasst:
- Senden einer Autorisierungsanforderung für einen potentiellen Verbindungsaufbau durch die zweite Basisstation (105) mittels der ersten Basisstation (101) an das ausgewählte Kernnetzwerk über die zweite Basisstation (105), wobei die Autorisierungsanforderung eine Anzeige des ersten Kernnetzwerks (107) umfasst;
- das ausgewählte Kernnetzwerk sendet bei Validieren der Autorisierungsanforderung eine Genehmigung der Autorisierungsanforderung an die zweite Basisstation (105);
- Registrieren der ersten Basisstation (101) durch die zweite Basisstation (105) als schlecht funktionierende Basisstation; und
- Empfangen durch die erste Basisstation (101) von der zweiten Basisstation (105) der Genehmigung der Autorisierungsanforderung, die indikativ ist für die Autorisierungsinformation für die folgende Kommunikation der ersten Basisstation (101) mit der zweiten Basisstation (105).

2. Verfahren nach Anspruch 1, wobei der Aufbau der zweiten Kommunikationsverbindung (201) weiterhin umfasst die Verwendung durch die erste Basisstation (101) der Autorisierungsinformation zum Anfordern des Aufbaus von mindestens einem Teil der zweiten Kommunikationsverbindung (201B, 301B), welche die zweite Basisstation (105) mit dem ausgewählten Kernnetzwerk verbindet.

3. Verfahren nach Anspruch 2, wobei das ausgewählte Kernnetzwerk das zweite Kernnetzwerk (109) ist, der Aufbau des Teils (301B) der zweiten Kommunikationsverbindung (201) das Senden einer ersten Anforderung für das Einrichten einer Schnittstelle zwischen der zweiten Basisstation (105) und dem zweiten Kernnetzwerk (109) zum Bereitstellen von Konfigurationsdaten für das zweite Kernnetzwerk (109) umfasst, wobei die Konfigurationsdaten bestehen in dem Ermöglichen für die erste Basisstation (101), mit dem zweiten Kernnetzwerk (109) zu interagieren, und für die zweite Basisstation (105), als Zwischenkommunikationsknoten zwischen der ersten Basisstation (101) und dem zweiten Kernnetzwerk (109) zu fungieren.

4. Verfahren nach Anspruch 2, wobei das ausgewählte Kernnetzwerk das erste Kernnetzwerk (107) ist, der Aufbau des Teils (301B) der zweiten Kommunikationsverbindung (201B) das Senden einer ersten Anforderung für das Einrichten einer Schnittstelle zwischen der zweiten Basisstation (105) und dem ersten Kernnetzwerk (107) zum Bereitstellen einer Aktualisierungsnachricht für die Konfiguration der Basisstation zum Aktualisieren der Konfigurationsdaten auf Anwendungsebene umfasst, die nötig sind, damit das erste Kernnetzwerk (107) mit der ersten Basisstation (101) interagieren kann unter Verwenden der zweiten Basisstation (107) als ein Zwischenkommunikationsknoten, wobei die Konfigurationsaktualisierungsnachricht den Konfigurationsstatus der ersten Basisstation (101) vor dem Erkennen der Fehlfunktion anzeigt.

5. Verfahren nach einem beliebigen der vorhergehenden Ansprüche 2-4, weiterhin umfassend das Senden der Autorisierungsanforderung und der Aufbauanforderung an ein Teilnehmergerät (103), das mit der ersten Basisstation (101) verbunden ist, sodass das Teilnehmergerät (103) die empfangenen Anforderungen an die zweite Basisstation (105) weiterleitet.

6. Verfahren nach einem beliebigen der vorhergehenden Ansprüche 2-4, umfassend das Rundsenden der Autorisierungsanforderung und der Aufbauanforderung und das Abfangen der rundgesendeten Anforderungen von einem Teilnehmergerät, das mit der ersten Basisstation verbunden ist, sodass das Teilnehmergerät die empfangenen Anforderungen an die zweite Basisstation weiterleitet.

7. Verfahren nach Anspruch 5 oder 6, wobei das Teilnehmergerät (103) sowohl mit der ersten (101) als auch mit der zweiten Basisstation (105) verbunden ist.

8. Verfahren nach einem beliebigen der vorhergehenden Ansprüche 5-7, wobei für den Fall, dass das Teilnehmergerät (103) sich nicht im Abdeckungsbereich der zweiten Basisstation (105) befindet, das Teilnehmergerät (103) die Anforderungen über das mindestens eine zweite Teilnehmergerät, UE, (503) weiterleitet, das sich im Abdeckungsbereich der zweiten Basisstation (105) befindet.

9. Verfahren nach einem beliebigen der vorhergehenden Ansprüche, wobei die zweite Basisstation (105) eine Basisstation in einem Satz von Basisstationen ist, wobei das Verfahren weiterhin umfasst das Auswählen der zweiten Basisstation (105) aus dem Satz von Basisstationen unter Verwenden eines Auswahlkriteriums, wobei das Auswahlkriterium den mit dem zweiten Kernnetzwerk (109) verbundenen Bediener umfasst, wobei der Bediener mit dem ersten Kernnetzwerk (107) verbunden ist.

10. Verfahren nach einem beliebigen der vorhergehenden Ansprüche, wobei für den Fall, dass die Kommunikationsverbindung (113) zwischen der zweiten Basisstation und dem zweiten Kernnetzwerk schlecht funktioniert, das Verfahren weiterhin umfasst den Aufbau einer dritten Kommunikationsverbindung (601) von der ersten Basisstation (101) an eines aus dem ersten (107) und einem dritten Kernnetzwerk (601) über die zweite Basisstation (105) und eine dritte Basisstation (605) in Kommunikation mit dem dritten Kernnetzwerk (609).

11. Verfahren nach einem beliebigen der vorhergehenden Ansprüche, wobei die erste Basisstation (101) ein eingebautes UE (104) umfasst, wobei die erste Basisstation (101) mindestens mit der zweiten Basisstation (105) unter Verwenden des eingebauten UE (104) kommuniziert.

12. Eine erste Basisstation, die eine erste Kommunikationsverbindung (111) verwendet zum Austausch von Daten zum Interagieren mit einem ersten Kernnetzwerk (107) in einem Kommunikationssystem (100), wobei das Kommunikationssystem (100) eine zweite Basisstation (105) umfasst und die erste Basisstation ausgelegt ist
- zum Erkennen einer Fehlfunktion der ersten Kommunikationsverbindung (111); und
- zum Aufbau einer zweiten Kommunikationsverbindung (201) von der ersten Basisstation (101) zu einem ausgewählten Kernnetzwerk des ersten und zweiten Kernnetzwerks des Kommunikationssystems (100) über die zweite Basisstation (105),
- zum Senden von Daten an das ausgewählte Kernnetzwerk über die zweite Kommunikationsverbindung,
**dadurch gekennzeichnet, dass** die erste Basisstation weiterhin ausgelegt ist zum Senden, bevor die Fehlfunktion erkannt wird, einer Autorisierungsanforderung für den potentiellen Verbindungsaufbau über eine zweite Basisstation (105) an das ausgewählte Kernnetzwerk mittels der zweiten Basisstation (105), wobei die Autorisierungsanforderung eine Anzeige des ersten Kernnetzwerks (107) umfasst,
- zum Empfangen von dem ausgewählten Kernnetzwerk über die zweite Basisstation (105) einer Genehmigung der Autorisierungsanforderung, die indikativ ist für die Autorisierungsinformation für die folgende Kommunikation der ersten Basisstation (101) mit der zweiten Basisstation (105).

## Revendications

1. Procédé d'exploitation d'une première station de base (101) dans un système de communication (100), la première station de base (101) utilisant une première liaison de communication (111) pour échanger des données afin d'interagir avec un premier coeur de réseau (107) du système de communication, le système de communication (100) comprenant une deuxième station de base (105), le procédé comprenant les étapes suivantes :
- détecter un mauvais fonctionnement de la première liaison de communication (111) ; et
- établir une deuxième liaison de communication (201) depuis la première station de base (101) vers un coeur de réseau sélectionné parmi le premier (107) et un deuxième coeur de réseau (109) du système de communication (100) via la deuxième station de base (105), la deuxième station de base (105) recevant des données en provenance de la première station de base via la deuxième liaison de communication et transférant les données reçues au coeur de réseau sélectionné, par laquelle la première station de base (101) interagit avec le coeur de réseau sélectionné via la deuxième station de base (105), **caractérisé en ce que** le procédé comprend en outre, avant la détection du mauvais fonctionnement, les étapes suivantes :
- envoi d'une demande d'autorisation pour l'établissement potentiel d'une connexion par le biais de la deuxième station de base (105) par la première station de base (101) au coeur de réseau sélectionné via la deuxième station de base (105), la demande d'autorisation comprenant une indication du premier coeur de réseau (107) ;
- envoi par le coeur de réseau sélectionné dès validation de la demande d'autorisation d'une approbation de la demande d'autorisation à la deuxième station de base (105) ;
- enregistrement de la première station de base (101) par la deuxième station de base (105) en tant que station de base défectueuse ; et
- réception par la première station de base (101) en provenance de la deuxième station de base (105) de l'approbation de la demande d'autorisation indiquant des informations d'autorisation pour la communication ultérieure de la première station de base (101) avec la deuxième station de base (105).

2. Procédé selon la revendication 1, dans lequel l'établissement de la deuxième liaison de communication (201) comprend en outre l'utilisation par la première station de base (101) des informations d'autorisation pour demander l'établissement d'au moins une partie de la deuxième liaison de communication (201B, 301B) qui connecte la deuxième station de base (105) au coeur de réseau sélectionné.

3. Procédé selon la revendication 2, dans lequel le coeur de réseau sélectionné est le deuxième coeur de réseau (109), l'établissement de la partie (301B) de la deuxième liaison de communication (201) comprenant l'envoi d'une demande initiale pour mettre en place une interface entre la deuxième station de base (105) et le deuxième coeur de réseau (109) afin de fournir des données de configuration au deuxième coeur de réseau (109), dans lequel les données de configuration permettent à la première station de base (101) d'interagir avec le deuxième coeur de réseau (109) et à la deuxième station de base (105) de fonctionner en tant que noeud de communication intermédiaire entre la première station de base (101) et le deuxième coeur de réseau (109).

4. Procédé selon la revendication 2, dans lequel le coeur de réseau sélectionné est le premier coeur de réseau (107), l'établissement de la partie de la deuxième liaison de communication (201B) comprenant l'envoi d'une demande pour mettre en place une interface entre la deuxième station de base (105) et le premier coeur de réseau (107) afin de fournir un message de mise à jour de configuration de la station de base pour mettre à jour les données de configuration de niveau application nécessaires au premier coeur de réseau (107) pour interagir avec la première station de base (101) en utilisant la deuxième station de base (107) en tant que noeud de communication intermédiaire, le message de mise à jour de configuration indiquant l'état de la configuration de la première station de base (101) avant la détection du mauvais fonctionnement.

5. Procédé selon l'une quelconque des revendications précédentes 2 à 4, comprenant l'envoi de la demande d'autorisation et de la demande d'établissement à un équipement d'utilisateur (103) qui est connecté à la première station de base (101), de sorte que l'équipement d'utilisateur (103) transfère les demandes reçues à la deuxième station de base (105).

6. Procédé selon l'une quelconque des revendications précédentes 2 à 4, comprenant la diffusion de la demande d'autorisation et de la demande d'établissement, et l'interception des demandes diffusées par un équipement d'utilisateur qui est connecté à la première station de base, de sorte que l'équipement d'utilisateur transfère les demandes reçues à la deuxième station de base.

7. Procédé selon la revendication 5 ou 6, dans lequel l'équipement d'utilisateur (103) est connecté à la fois à la première (101) et à la deuxième (105) station de base.

8. Procédé selon l'une quelconque des revendications précédentes 5 à 7, dans lequel si l'équipement d'utilisateur (103) ne se situe pas dans la zone de couverture de la deuxième station de base (105), l'équipement d'utilisateur (103) transfère les demandes via au moins un deuxième équipement d'utilisateur, UE, (503) qui se situe dans la zone de couverture de la deuxième station de base (105).

9. Procédé selon l'une quelconque des revendications précédentes, la deuxième station de base (105) étant une station de base d'un ensemble de stations de base, le procédé comprenant en outre la sélection de la deuxième station de base (105) dans l'ensemble de stations de base à l'aide d'un critère de sélection, le critère de sélection comprenant le fait que l'opérateur associé au deuxième coeur de réseau (109) est l'opérateur associé au premier coeur de réseau (107).

10. Procédé selon l'une quelconque des revendications précédentes, dans lequel si la liaison de communication (113) entre la deuxième station de base et le deuxième coeur de réseau fonctionne mal, le procédé comprend en outre l'établissement d'une troisième liaison de communication (601) depuis la première station de base (101) vers un coeur de réseau parmi le premier (107) et un troisième coeur de réseau (601) via la deuxième station de base (105) et une troisième station de base (605) en communication avec le troisième coeur de réseau (609).

11. Procédé selon l'une quelconque des revendications précédentes, dans lequel la première station de base (101) comprend un UE intégré (104), dans lequel la première station de base (101) communique avec au moins la deuxième station de base (105) en utilisant l'UE intégré (104).

12. Première station de base utilisant une première liaison de communication (111) pour échanger des données afin d'interagir avec un premier coeur de réseau (107) dans un système de communication (100), le système de communication (100) comprenant une deuxième station de base (105), la première station de base étant adaptée
- pour détecter un mauvais fonctionnement de la première liaison de communication (111) ; et
- pour établir une deuxième liaison de communication (201) depuis la première station de base (101) vers un coeur de réseau sélectionné parmi le premier et le deuxième coeur de réseau du système de communication (100) via la deuxième station de base (105),
- pour envoyer des données au coeur de réseau sélectionné via la deuxième liaison de communication,
**caractérisée en ce que** la première station de base est en outre adaptée, avant la détection du mauvais fonctionnement,
- pour envoyer une demande d'autorisation pour l'établissement potentiel d'une connexion par le biais de la deuxième station de base (105) au coeur de réseau sélectionné via la deuxième station de base (105), la demande d'autorisation comprenant une indication du premier coeur de réseau (107),
- pour recevoir en provenance du coeur de réseau sélectionné via la deuxième station de base (105) une approbation de la demande d'autorisation indiquant des informations d'autorisation pour la communication ultérieure de la première station de base (101) avec la deuxième station de base (105).
